# EUROPEAN PATENT APPLICATION

(11) **EP 3 934 200 A1**
(43) Date of publication of application: **05.01.2022**
(21) Application number: 21179908.5
(22) Date of filing: 16.06.2021
(51) Int. Cl.: H04L 29/06, H04L 9/32, G06Q 10/06

(54) **DISTRIBUTED QUALITY MANAGEMENT AND CONTROL SYSTEMS AND METHODS FOR DECENTRALIZED MANUFACTURING USING BLOCKCHAIN**

(30) Priority: 03.07.2020 IN 202011028365; 22.10.2020 US 202017077008
(71) Applicant: Honeywell International Inc., Charlotte, NC 28202 (US)
(72) Inventor: KAR, Satyanarayan, Charlotte, 28202 (US); GODFREY, Donald, Charlotte, 28202 (US); RAO, Sujaya, Charlotte, 28202 (US); HOTA, Rakesh, Charlotte, 28202 (US); KASIMSETTY, Vinayakumar, Charlotte, 28202 (US)
(74) Representative: Lucas, Peter Lawrence

(57) **Abstract**

A method for secure transfer of an additive manufacturing design file and for process monitoring of additively manufactured articles that are manufactured in accordance with such design file includes the steps of: at an article designer located at a first location, generating the additive manufacturing design file; from the first location, sending the additive manufacturing design file to an additive manufacturing AM vendor located at a second location different from the first location; at the second location, using an additive manufacturing tool, manufacturing the article in accordance with the design file; and at the second location, and using a plurality of process monitoring devices, generating a plurality of process parameters associated with the manufacture of the article; at the second location, generating a cryptographic, distributed ledger comprising the plurality of process parameters. The ledger is generated in the manner of a blockchain.

## Description

### CROSS-REFERENCE TO RELATED APPLICATIONS

The present application claims the benefit of priority to India provisional application serial no. 202011028365 filed on July 3rd, 2020, the contents of which are herein incorporated by reference in their entirety.

### TECHNICAL FIELD

The following disclosure relates generally to quality management and control systems and methods, for example in the context of additive manufacturing processes. More particularly, the following disclosure relates to distributed quality management and control systems and methods for decentralized manufacturing using blockchain.

### BACKGROUND

As appearing herein, the term "additive manufacturing" and the corresponding abbreviation "AM" refer to computer-controlled manufacturing processes during which articles of manufacture are gradually built-up or compiled on a layer-by-layer basis in accordance with computer-readable AM design data. The term "AM processes" encompasses 3D printing processes including, but not limited to, stereolithography (SLA), fused filament fabrication (FFF), and laser sintering *(e.g.,* direct metal laser sintering (DMLS)) processes. Similarly, articles of manufacture fabricated utilizing such AM processes are referred herein to as "additively manufactured components" or "AM components," the computer-controlled systems utilized to fabricate AM components are referred to as "additively manufacturing machines" or "AM machines," and the supply chains through which such components are obtained are referred to as "additive manufacturing supply chains" or "AM supply chains."

AM components are gaining widespread acceptance in many industries. Certain industries, however, have proven resistant to adoption of AM components due, at least in part, to challenges related to perceived quality control when such components are acquired through supply chains. Consider, for example, the aerospace industry. Regulatory bodies governing the aerospace industry, such as the FAA in the United States, are perhaps circumspect regarding the usage of AM components in flight applications unless such components are thoroughly tested. However, the supply chains from which AM aerospace components may be obtained remain in relative infancy, in comparison with conventional manufacturing supply chains. To the extent such supply chains exist, they may contain AM vendors that lack the capital resources and expertise to adequately validate AM aerospace components. Similar challenges likewise hamper widespread adoption of supply chain-provided AM components in other industries, as well. This may be particularly true for industries subject to stringent regulations or that otherwise require AM components to satisfy relatively demanding design constraints including, for example, the medical, automotive, and military industries.

For designers of AM components, there is a large demand for metal 3D printing capacity to manufacture components in accordance with their designs and to market such components on an industrial scale. Because of this growing demand, there may be less-than-sufficient internal machine capacity available at the designer, and as such the aforementioned AM supply chains may be sought-out to accommodate the demand for such components. Utilizing such supply chains, however, brings with it the desire for the designer to protect the intellectual property (IP) of its designs. Further, the designer may desire to ensure and be assured the printed components meet the metallurgical demands, structural integrity, and physical shape (geometry) of the intended design. These features make-up, in part, the designer's IP for each component produced.

To protect these IP features as described above, the designer may seek to use encryption technology when electronic computer-assisted design (CAD) files are transmitted from the designer location to a vendor location in the AM supply chain. The designer may also seek to use encryption technology to protect data transactions. However, in the modern age of data transfer and international hacking of digital files, encryption may not always provide a sufficient solution to protect designer's IP. Theft and/or manipulation of designs is thus an ongoing concern. Moreover, the designer may also desire to protect its IP from a vendor in the AM supply chain that produces excess quantities of components and sells that excess in unregulated markets (*i.e.,* "black markets"). Still further, the designer may desire to have assurances that the vendor in the AM supply chain is printing the designer's components using any and all approved and verifiable processes that are required to produce a quality component that meets design specifications. To date, however, many companies in the AM supply chain do not have access to adequate anti-hacking software and procedures, and this lack of technology places the designer's IP at risk.

There thus exists an ongoing commercial demand across multiple industries for the provision of systems and methods for enhancing quality management of AM components obtained through AM supply chains, which includes security protections to guard against the theft or modification of the designer's IP. Ideally, such systems and methods could be implemented in a relatively seamless, cost-effective manner, while establishing high integrity, tamper-resistant quality control measures governing the production and distribution of AM components. Other desirable features and characteristics of the present invention will become apparent from the subsequent Detailed Description and the appended Claims, taken in conjunction with the accompanying Drawings and the foregoing Background.

### BRIEF SUMMARY

Distributed quality management and control systems and methods for decentralized manufacturing using blockchain are disclosed generally herein. For example, in one embodiment, a method for secure transfer of an additive manufacturing design file and for process monitoring of additively manufactured articles that are manufactured in accordance with such design file includes the steps of: at an article designer located at a first location, generating the additive manufacturing design file; from the first location, sending the additive manufacturing design file to an additive manufacturing AM vendor located at a second location different from the first location, wherein the additive manufacturing design file is sent in an encrypted manner, and further wherein the additive manufacturing design file comprises a digital mark comprising indicia of the first location and the second location; at the second location, using an additive manufacturing tool, manufacturing the article in accordance with the design file, wherein the additive manufacturing tool comprises a plurality of process monitoring devices; at the second location, and using the plurality of process monitoring devices, generating a plurality of process parameters associated with the manufacture of the article; at the second location, generating a cryptographic, distributed ledger comprising the plurality of process parameters, wherein the ledger is generated in the manner of a block-chain; and from the second location, distributing the ledger to one or more recipients within a private network, the one or more recipients within the private network being defined by the article designer at the first location.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWING

At least one example of the present disclosure will hereinafter be described in conjunction with the following Drawing Figures, wherein like numerals denote like elements, and wherein:
FIG. 1 is a schematic that illustrates a quality management system (QMS) architecture suitable for monitoring the quality of AM components obtained through an AM supply chain, in accordance with an exemplary embodiment of the present disclosure;
FIG. 2 illustrates an exemplary blockchain architecture used in connection with the QMS architecture of FIG. 1, for purposes of data transfers between the product designer and the one or more AM vendors, in accordance with an exemplary embodiment of the present disclosure;
FIGS. 3A and 3B illustrate alternative views of an exemplary additive manufacturing network that utilizes the QMS architecture as shown in FIG. 1 and the blockchain architecture shown in FIG. 2, in accordance with an exemplary embodiment of the present disclosure;
FIG. 4 illustrates a process flow diagram showing the operation of the network of FIGS. 3A and 3B in the context of the QMS architecture as shown FIG. 1 utilizing the blockchain architecture as shown in FIG. 2, in accordance with an exemplary embodiment of the present disclosure;
FIG. 5 illustrates a process flow diagram showing the manner in which the deployment of the QMS architecture shown in FIG. 1 is verified after being deployed among the various nodes of the AM network shown in FIGS. 3A and 3B, in accordance with an exemplary embodiment of the present disclosure;
FIG. 6 is a system representation of the distribution process for distributing component design files within the AM network shown in FIGS. 3A and 3B, in accordance with an exemplary embodiment of the present disclosure;
FIG. 7 illustrates an access control concept for an AM vendor-received design file, usable with the QMS architecture shown in FIG. 1, and received via the AM network shown in FIGS. 3A and 3B, which is restricted by a multi-layer method of encryption, in accordance with an exemplary embodiment of the present disclosure;
FIG. 8A is a system diagram and FIG. 8B is a process flowchart illustrating the manner in which the blockchain architecture shown in FIG. 2 serves to protect IP data during transmission between the designer server and the AM vendor server using the AM network shown in FIGS. 3A and 3B, in accordance with an exemplary embodiment of the present disclosure; and
FIG. 9 is a process flowchart illustrating a secure workflow method for procuring AM components within an AM supply chain utilizing the QMS architecture shown in FIG. 1 and the blockchain architecture shown in FIG. 2, in accordance with an exemplary embodiment of the present disclosure.

### DETAILED DESCRIPTION

The following Detailed Description is merely exemplary in nature and is not intended to limit the invention or the application and uses of the invention. The term "exemplary," as appearing throughout this document, is synonymous with the term "example" and is utilized repeatedly below to emphasize that the description appearing in the following section merely provides multiple non-limiting examples of the invention and should not be construed to restrict the scope of the invention, as set-out in the Claims, in any respect.

The following disclosure provides quality management systems (QMS) and methods for enhancing quality control of AM components obtained through AM supply chains, which utilize blockchain technology to protect the intellectual property of the designer as well as to monitor and validate the manufacturing process at the AM vendor and the components produced therefrom. Embodiments of the below-described QMS may be operated by AM vendors (the AM vendor of AM components) to fulfill purchase orders placed by component designers. In an embodiment, a given AM supply chain may include only one component designer and any number of vendors.

Increasingly, AM machines or apparatuses are equipped with sensors capable of recording readings or measurements gathered during the fabrication of AM components. The below-described QMS leverage such sensor readings to compile component-specific sensor profiles, as may be gathered by the QMS during production of AM components by AM vendors in an AM supply chain. These readings may be compiled into a blockchain format for the transfer thereof between the AM vendor and the designer for security and validation purposes. A given AM vendor may produce the AM components at the request of a component designer, which supplies computer-readable AM design data, such as one or more CAD files containing a virtual model of the desired component. At chosen junctures during the AM production process, component quality (that is, the degree to which the AM components conform to design intent) is evaluated by comparing the component-specific sensor profiles to a baseline sensor profile, which corresponds to the AM design data, utilizing blockchain technology. If a given component-specific sensor profile fails to adequately conform with the baseline sensor profile, the AM component corresponding to the component-specific sensor profile may be flagged for remedial action, such as further testing or rejection. Corresponding quality control notifications, such as displayed text annunciations, may be generated at the AM machine to convey which, if any, of the recently-produced AM components are desirably subject to remedial action. In certain cases, the notifications may include instructions indicating specific remedial actions to be performed by the AM vendor for any non-conforming AM components.

The baseline sensor profile may be established by the component designer or another entity by validating a number of initially produced AM prototypes or "AM proofing components," which are subjected to and pass testing requirements. In this manner, the component designer may perform the desired validation processes utilizing the initially-produced AM proofing components. Senor profiles gathered for subsequently-fabricated production-run AM components, as manufactured by a vendor-operated QMS, may then be compared and contrasted against the baseline sensor profile utilizing specialized analysis software or algorithms. If the component-specific sensor profile for a given production-run AM component is sufficiently conformal with the baseline sensor profile, it may be determined with a relatively high degree of confidence that the given production-run AM component will likewise satisfy the design criteria tests applied to the validated AM proofing components. Quality assuredness and IP security is thus greatly enhanced in the context of AM supply chains without requiring the AM vendors, which often lack the financial resources and/or know-how to adequately validate AM components, to perform such tests, or to rely on potentially inadequate security measures, as initially noted above.

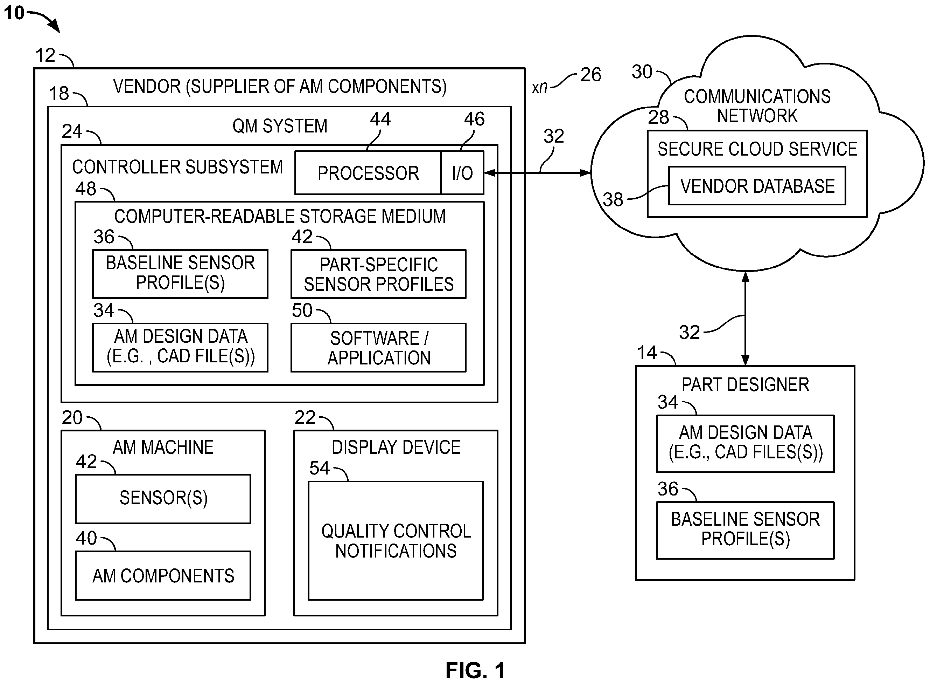

The below-described QMS architecture and methods, along with their attendant blockchain data transfer architecture/protocols, may be particularly useful for the production of AM components required to satisfy relatively stringent design parameters. One exemplary usage envisioned for the QMS and methods described herein is connected to the production of aerospace components for flight applications. Such aerospace component may include, but are not limited to, gas turbine engine (GTE) and electronic control system (ECS) components, to list but a few examples. This exemplary application notwithstanding, the below-described systems and methods, and the program products through which such methods are conveniently implemented, are not restricted to usage within any particular industry or to the production of any particular component types. Instead, embodiments of the QMS architecture and methods, and program products may be beneficially employed across a wide range of industries including the automotive, medical, and military industries. Additional description of an exemplary, non-limiting QMS architecture containing a QMS will now be described in conjunction with FIG. 1.

FIG. 1 is schematic diagram illustrating an overarching QMS supply chain or architecture 10, as illustrated in accordance with an exemplary embodiment of the present disclosure. QMS architecture 10 is generically depicted as including an AM vendor or vendor 12, which operates utilizing a QMS 18. QMS 18 may be utilized to carry-out certain embodiments of the methods described herein, as described more fully below. While only a single vendor 12 is shown in detail in the schematic of FIG. 1, QMS architecture 10 may contain (and embodiments of below-described QMS method may be performed by) any practical number of vendors possessing suitably-equipped QMS similar or identical to QMS 18. This is emphasized in FIG. 1 by symbol 26 ("xn") appearing adjacent the upper right corner of the box representing vendor 12.

In addition to vendor 12, QMS architecture 10 further contains a component designer 14. As represented by double-headed arrows 32, bidirectional communication between vendor 12 and component designer 14 occurs over a communications network 30 utilizing blockchain technology. Communications network 30 may encompass any network or group of networks enabling data transmission between vendor 12 and component designer 14. In this regard, communications network 30 may include one or more open content delivery networks (CDNs), virtual private networks (VPNs), the Internet, and various other communications networks implemented in accordance with TCP/IP protocol architectures or other conventional protocols. Network 30 may also encompass one or more wired or wireless local area networks (LANs), wide area networks (WANs), a cellular network, and/or any other public or private networks.

AM design data 34 may contain any suitable file type and will often include one or more CAD files, which may be generated by component designer 14 utilizing various different commercially-available CAD program products. A non-exhaustive list of such commercially-available CAD program products includes TOPSOLID, CATIA, CREO, AUTODESK INVENTOR, SOLIDWORKS, and NX CAD software packages. The term "AM design data," as appearing herein, thus broadly encompasses any computer-readable data or file types, which may be utilized by an AM machine to fabricate AM components in accordance with a predetermined design, regardless of the particular manner in which the data is stored or disseminated.

As generically illustrated in FIG. 1, at least one baseline sensor profile 36 is utilized to carry-out the quality comparison analysis. Component designer 14 may initially construct baseline sensor profile 36 by validating any desired number of AM proofing components, which are produced by component designer 14 utilizing a non-illustrated AM machine, by vendor 12 utilizing AM machine 20, and/or by a different entity possessing a suitable-equipped AM machine. During production of the AM proofing components, initial sensor profiles may be collected in the manner described below. Component designer 14, or another entity acting at the direction of designer 14, may then perform any number of tests on the AM proofing components. The initially-gathered sensor profiles corresponding to those AM proofing components, which pass testing or are otherwise validated, may then be utilized to construct baseline sensor profile 36. The particular type of test or tests conducted will vary amongst embodiments in relation to design requirements and other factors. In the case of AM GTE components, for example, such tests may be designed to evaluate crack propagation and growth propensity, tensile strengths, high temperature creep propensity, life cycle fatigue properties, and similar characteristics within the high temperature GTE environment.

With continued reference to FIG. 1, a copy of baseline sensor profile 36 may be stored locally by QMS 18 in embodiments in which controller subsystem 24 conducts the below-described quality comparison analysis. In such implementations, the blockchain technology may be utilized such that local user access to and editing of baseline sensor profile 36 may be restricted or entirely prevented to ensure data integrity. Baseline sensor profile 36 may, however, be periodically updated by component designer 14 through secure cloud service 28. In such embodiments, the blockchain technology, along with mutual authentication and encryption techniques may be employed for data security purposes. Secure cloud service 28 may thus only avail QMS 18 of protected data (*e.g.,* AM design data 34) and access to the below-described quality management services following proper authentication of vendor 12. In this case, and as indicated in FIG. 1, secure cloud service 28 may maintain a database 38 of vendors approved by component designer 14. Vendor 12 may be required to provide unique, identifying information matching that stored in database 38 when establishing a data-sharing session with service 28 over communications network 30.

Moreover, the baseline profiles 36 are configured/deployed as a blockchain smart contract. This deployment is digitally coordinated between the AM vendor and the component designer. As such, every time the AM vendor machines report back on the component's sensor profile, the blockchain smart contract verifies the information. The Blockchain nodes from the components designer and AM vendor side attest to the results by voting. Once the consensus is reached, the transaction output is stored in the distributed ledger. This transaction becomes an immutable record of that event.

Vendor-operated QMS 18 will now be described in greater detail. In the illustrated example, QMS 18 includes an AM apparatus or machine 20, a display device 22, and a controller subsystem 24, which is operatively coupled to AM machine 20 and display device 22. Addressing first AM machine 20, AM machine 20 may assume the form of any apparatus, system, or device suitable for fabricating AM components by successively building-up such components, on a layer-by-layer basis, in accordance with CAD data files or other computer-readable AM design data. As a first example, AM machine 20 may be a 3D printer capable of producing AM components utilizing an FFF AM processes. Alternatively, and as a second example, AM machine 20 may be an SLA or laser sintering ***(e.g.,*** DMLS) apparatus. In many cases, AM machine 20 may be capable of producing metallic AM components by, for example, heating a metallic source material ***(e.g.,*** supplied as a filament (wire), powder bed, actively-flowed powder, or the like) utilizing a suitable heat input source (*e.g.,* a laser or an electron beam), which creates weld pools to fuse together the source material in a targeted manner to gradually build-up or successively compile the desired component. The metallic source material may be a superalloy, such a nickel-based or cobalt-based superalloy, in implementations in which QMS 18 is utilized to produce GTE or aerospace components. In other embodiments, AM machine 20 may assume different forms suitable for producing AM components or three dimensionally printed components. The components fabricated utilizing QMS 18 are generically represented in FIG. 1 by box 40.

AM machine 20 is equipped with one or more sensors 42. Sensors 42 may assume any form suitable for capturing measurements or readings pertaining to AM components 40, while such components are produced by AM machine 20. In embodiments, sensors 42 include at least one temperature sensor, such as a pyrometer, capable of measuring local fusion temperatures captured during layer-by-layer build-up of AM components 40. When AM components 40 are fabricated from a metallic material, such temperature measurements may be referred to as "fusion" or "weld pool" temperature measurements. In certain implementations, such fusion temperature measurements are captured over a time frame encompassing immediately prior to, during, and immediately after application of heat input fusing the source material. This results in a fusion time-versus-temperature curve or characteristic, which may be gathered for each layer or for a subset of layers contained in each AM component 40. Collectively, this data may yield a component-specific sensor profile 42, which may be compared against baseline sensor profile 36 during the quality analysis process. Each component-specific sensor profile 42 may contain any number and type of data characteristics captured by sensors 42, with the discussion of time-phased temperature characteristics serving only as a useful and non-limiting example.

In addition to or in lieu of one or more temperature sensors, sensors 42 may further include sensors capable of capturing various other parameters relating to AM components 40. For example, sensors 42 may include one or more image sensors capable of capturing image data in the visible, infrared, and/or ultraviolet portions of the electromagnetic spectrum. Such image data may be utilized to calculate layer-by-layer dimensions of AM components, as captured during the AM fabrication process and utilized to compile component-specific sensor profiles 42 and baseline sensor profile 36. In certain embodiments, sensors 42 may record or measure other parameters during the AM fabrication process, which do not directly pertain to AM components 40, but rather to the operating characteristics of AM machine 20, to the source material or materials from which AM components 40 are produced, to the internal environment within AM machine 20, and/or to the environment external to AM machine 20. With the understanding that such parameters will vary in conjunction with the type of AM machine utilized and similar factors, a non-exhaustive list of additional parameters that may be gathered by sensors 42 includes measurements pertaining to: room temperature, pressure, and humidity levels; and temperature, pressure, humidity, and gas *(e.g.,* O₂) levels within the process chamber or "print bed" of AM machine 20. In embodiments, sensors 42 may also measure parameters relating to the operation of AM machine 20, such as chiller state, collector position, filter pressure, re-coater position and speed, and dispenser position.

As previously noted, QMS 18, and specifically controller subsystem 24, compiles component-specific sensor profiles 42 for AM components 40 during fabrication of AM components 40, and encrypts such profiles using blockchain technology. Controller subsystem 24 may transmit the encrypted component-specific sensor profiles 42 over communications network 30. To support such functionalities, controller subsystem 24 further includes at least one processor 44, I/O features 46, and a computer-readable memory or storage medium 48. Processor 44 is operably coupled to I/O features 46 and to storage medium 48. I/O features 46 may include a network interface, an interface to storage medium 48, an interface to display device 22, and any user input interfaces enabling local users to interact with and control QMS 18. Blockchain nodes are present in each of the vendor 12 and component designer 14 ends.

Storage medium 48 stores AM design data 34 and component-specific sensor profiles 36. Additionally, in embodiments wherein QMS 18 performs onsite quality analysis, storage medium 48 may further store baseline sensor profile 36 and specialized comparison software application 50. Comparison software application 50 may contain computer-executable code that, when executed by processor 44, causes QMS 18 to perform the below-described QMS process. The foregoing components contained in controller subsystem 24 may each be implemented utilizing any suitable number and combination of known devices including microprocessors, memories, power supplies, storage devices, interface cards, and other standard components. Such components may include or cooperate with any number of software programs or instructions (e.g., software application 50) designed to carry-out the various methods, process tasks, encoding and decoding algorithms, and relevant display functions.

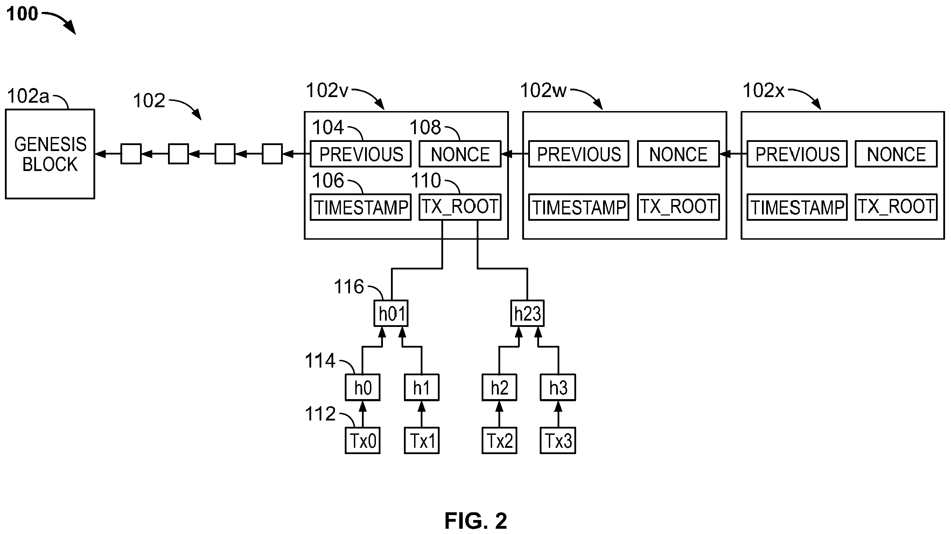

During the operation of QMS 18, processor 44 selectively executes computer-readable code or instructions (herein, "software application 50"), which directs the various hardware features of QMS 18 to perform the functions described herein. Software application 50 interfaces with processor 44, storage medium 48, and I/O features 46 via any suitable operating system to provide these functionalities. Software application 50 may be provided to QMS 18 in any manner, including by download through communications network 30 from component designer 14 or secure cloud service 28. During the below-described QMS process, control logic contained in software application 50 may control sensors 42, AM machine 20, and/or display device 22. Additionally, when executed, software application 50 may selectively generate quality control notifications 54 on a display screen of display device 22. Software application 50 may also be responsible for encrypting the sensor data 42 using blockchain technology. Quality control notifications 54 may indicate which, if any of AM components 40 are desirably subject to remedial action. Additionally, in certain instances, quality control notifications 54 may be expressed as textual annunciations or readouts, which contain additional actions to be performed for those AM components 40 subject to remedial action. Software application 50 may further selectively establish connections through communications network with appropriate remote entities (e.g., secure cloud service 28 and component designer 14), as appropriate for a given implementation of the QMS process. Additional description of the blockchain technology utilized by QMS 18 will now be provided below, in connection with FIG. 2.

FIG. 2 illustrates an example blockchain 100 used with QMS 18 for recording of the component production data transfers between the designer and the one or more AM vendors in accordance with the disclosure. A "blockchain" generally refers to a distributed ledger of transactions, where various parties have access to the distributed ledger. As used herein in connection with the description of the blockchain architecture in FIG. 2, the terms "party" or "parties" refer to either or both of the component designer or the AM vendor(s), which have access to the blockchain and have permission to record entries thereon. The parties may use the distributed ledger to perform various functions, such as publishing new transactions to the blockchain or using the blockchain to verify ownership of something. New transactions are added as blocks to a blockchain using cryptographic operations, and each block in the blockchain (except the first block) is linked to a previous block in the blockchain. Approval by a majority of parties is generally needed to add transactions to the blockchain or to verify ownership.

As shown in FIG. 2, the blockchain 100 includes a sequence of blocks 102a - 102x (which are referred to generally as blocks 102). Each block 102 functions as a record associated with a specific transaction. As described in more detail below, each transaction represented by a block 102 in the blockchain 100 is associated in some way with a transfer of data related to the AM process. For example, one or more blocks 102 in the blockchain 100 could represent design file data, models, materials, and parameters as generated by the designer. As another example, one or more blocks 102 in the blockchain 100 could represent manufacturing sensor data as generated at the AM vendor. As a further example one or more blocks 102 in the blockchain 100 could represent baseline sensor profiles related to the manufacture of the components. In some cases, one or more blocks 102 in the blockchain 100 could represent validation data related to either the design or manufacture of the components. Of course, the blocks 102 could be associated with any other transactions related to the AM component design or manufacture.

Except for the first block 102a in the blockchain 100, each block 102 includes a previous hash value 104, which represents a cryptographic hash from the previous block 102 in the blockchain 100. Each block 102 also includes a timestamp 106, which identifies the date and time that the associated block 102 was created. Each block 102 further includes a nonce value 108, which represents a value that is added to the block 102 by the party who created the block 102. The nonce value 108 provides proof to other parties that the party who created the block 102 performed certain cryptographic operations in order to generate a valid block 102, where the other parties may easily verify the validity of the block 102 using the nonce value 108. This feature is especially useful in connection with maintaining the integrity of the AM component design and preventing outside actors from tampering with the design.

In addition, each block 102 includes transaction data, that is, any of the sensor data, design files, baseline profiles, models, manufacturing data, *etc.,* as described above, which includes a transaction root hash value 110. The transaction root hash value 110 in each block 102 represents a hash value generated by the party who created that block 102 based on transaction information. In this example, the transaction root hash value 110 in each block 102 may be generated by taking data 112 associated with one or more transactions (such as actual data or metadata describing the transactions) and applying one or more hashing functions using the data 112. This generates one or more hash values 114. Assuming there are multiple hash values 114, one or more additional hashing functions (such as pairwise hashing functions) may be applied to the hash values 114 in order to generate one or more additional hash values 116. An additional hashing function could then be applied to the hash values 116 and other contents of the block 102 (such as the previous hash value 104, the timestamp 106, and the nonce value 108) in order to generate the root hash value 110. Note that this represents one example of how the transaction root hash value 110 could be generated. In general, the root hash value 110 could be generated in any suitable manner, as long as the root hash value 110 represents a cryptographic hash of most or all of the block 102.

In one aspect of operation, multiple "local" copies of the blockchain 100 are stored and maintained by multiple computing nodes, each of which is accessible by one or more (and typically all) of the parties associated with the blockchain 100, for example the designer and one or more AM vendors. The blockchain 100 therefore functions as a distributed ledger that may be used by multiple parties to obtain or verify information contained in the blocks 102 of the blockchain 100. The parties also generate or use transaction data, and cryptographic operations are performed using the transaction data to create and add new blocks 102 to the blockchain 100. Thus, parties may append new blocks 102 to the blockchain 100 at different computing nodes as new transactions occur, and these blocks 102 are propagated to other computing nodes so that the blockchain 100 may be updated at those nodes. Each new block 102 is linked to a previous block 102 in the blockchain 100 as described above, which helps to prevent someone from illicitly changing data in earlier blocks 102 of the blockchain 100. Approval of a majority of the parties may be required before each new block 102 is added to the blockchain 100. In a particular embodiment of the present disclosure, the blockchain 100 described above is a "private" blockchain, meaning the participation is limited to only those members invited by the administrator (for example the designer). Thus, access to the blockchain 100 may be limited to only those parties relevant to the AM process *(e.g.,* the designer and the contracted AM vendors).

In this way, the blockchain 100 provides a tamper-evident distributed ledger that may be used by multiple parties, as allowed by the administrator. This helps to improve the security of the AM data transfer among the parties involved in the blockchain 100 over time. The use of blockchain technology also helps to provide data authenticity. In addition, the use of blockchain technology allows for distributed availability of the data as well as distributed accountability between the parties.

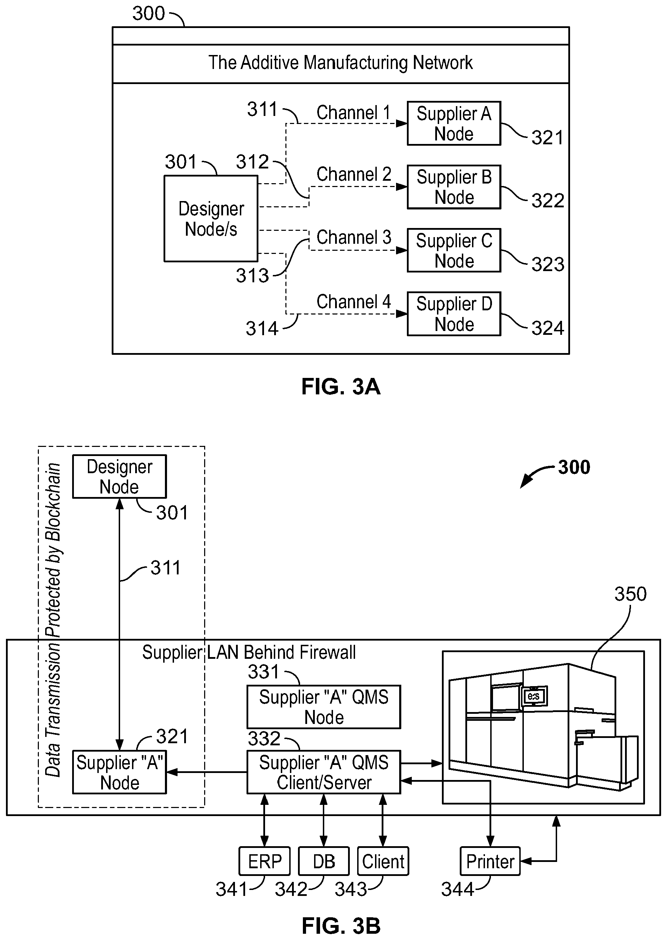

Turning now to FIGS. 3A and 3B, illustrated is an exemplary additive manufacturing network 300 that utilizes the QMS 18 as described in FIG. 1 and the blockchain 100 as described in FIG. 2. As shown in FIG. 3A, network 300 includes various design "nodes", the first of which is the designer node 301. The administrator (*i.e.,* designer) of the private blockchain 100 may be responsible for inviting any number of AM vendors to the blockchain 100, triggered through a lifecycle application. For example, as shown, AM vendors (shown as AM vendor nodes A - D (321 - 324, respectively)) may be given access to the blockchain 100, although any number is possible. Network 300 may further be conceptualized as including a "channel" or data transfer path between the designer node 301 and each respective AM vendor node, shown as channels 1 - 4 (311 - 314, respectively).

FIG. 3A illustrates that the various nodes (301, 321 - 324) interact with each other in the network 300. The AM vendor nodes 321 - 324 are authenticated and then authorized for interacting with the designer node 301 via AM network 300. Every node 301, 321 - 324 is identified by certificates which are distributed by the AM administrative application server, resident at the designer IT infrastructure. As shown, the AM network 300 has several channels 311 - 314 which may be embodied as a sub-network of the designer and may be specific for each AM vendor node 321 - 324. Each AM vendor channel 311 - 314 ensures the information is private to the nodes participating in the channel, thus preventing unauthorized communication among the various AM vendors.

As shown in FIG. 3B, the AM administrative application server 331 is operable with a method to interact with a certificate authority. The certificate authority is managed at the designer node 301 and distributes certificates to all the software instances of the AM network, which includes particularly the AM vendor nodes 321 - 324, and application servers at the AM vendors. For example, the AM application servers may be the "connectors" that may interact with AM vendor backend systems 332 that accomplish the actual AM processes, such as enterprise resource planning (ERP) systems 341, secure databases 342, client queueing 343, or scheduling printing 344 services. Upon receiving an invite from the designer (administrator), an AM vendor may receive a link to download software within their firewall. As component of the registration process the AM vendor provides inputs pertaining to their identity (company codes, accreditation, etc.). Based on this identity, the certificates may be distributed. Similarly, the AM vendors may also provide information about the AM printers 350 at their location (printer types, printer ID, last calibrated date, etc.). Additional identity certificates for these AM printers 350 may also be distributed. Using the AM administration server, the AM vendor is able to configure the different components along with their identities. Upon successful connection of the AM vendor nodes with the AM network 300, the interactions will be observed/recorded on the ledger of blockchain 100.

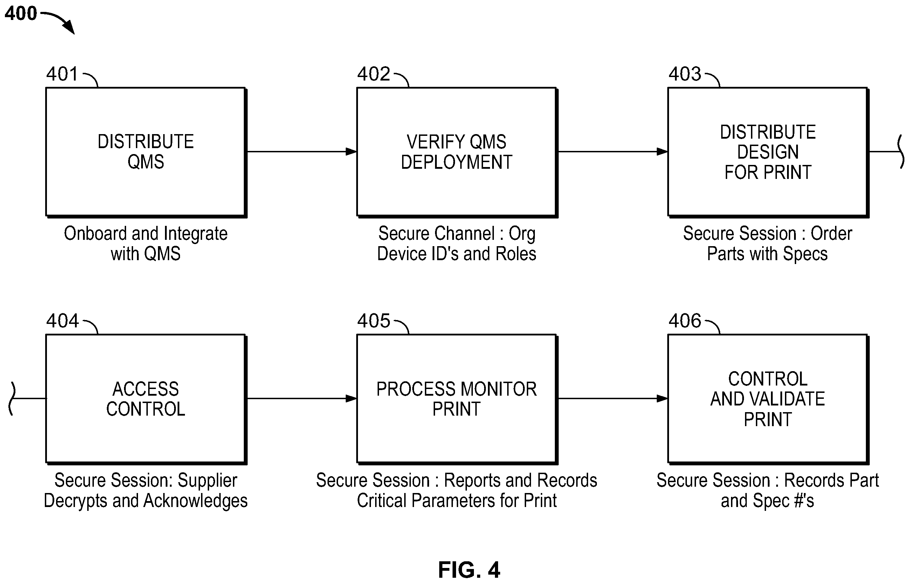

Turning now to FIG. 4, illustrated is a process flow diagram 400 that illustrates the operation of network 300 in the context of QMS 18 utilizing blockchain 100. Flow diagram 400 illustrates six steps 401 - 406 performed in sequence, although it should be appreciated in practice that some steps may be repeated or performed out of the illustrated sequence, as necessary. Each of the six steps 401 - 406 of the process flow diagram are described in greater detail, below.

Referring first to step 401 of process flow diagram 400, QMS 18 is distributed among the AM vendor nodes 321 - 324 of network 300. As noted initially above, QMS 18 includes a set of technical and business rules that are deployed in the AM network 300 on the AM vendor nodes 321 - 324 to ensure a repeatable and verifiable process for printing a component, such as an aerospace component. QMS 18 further includes of set of process steps to produce a verifiable component by authorized AM vendors. As such, QMS 18 includes checkpoints that encode the rules to verify the process steps. Using the communication channels 311 - 314, QMS 18 may be appropriately distributed at step 401 for the particular components that will be manufactured at a respective AM vendor, namely to the respective AM vendor nodes 321 - 324, using the AM administration server.

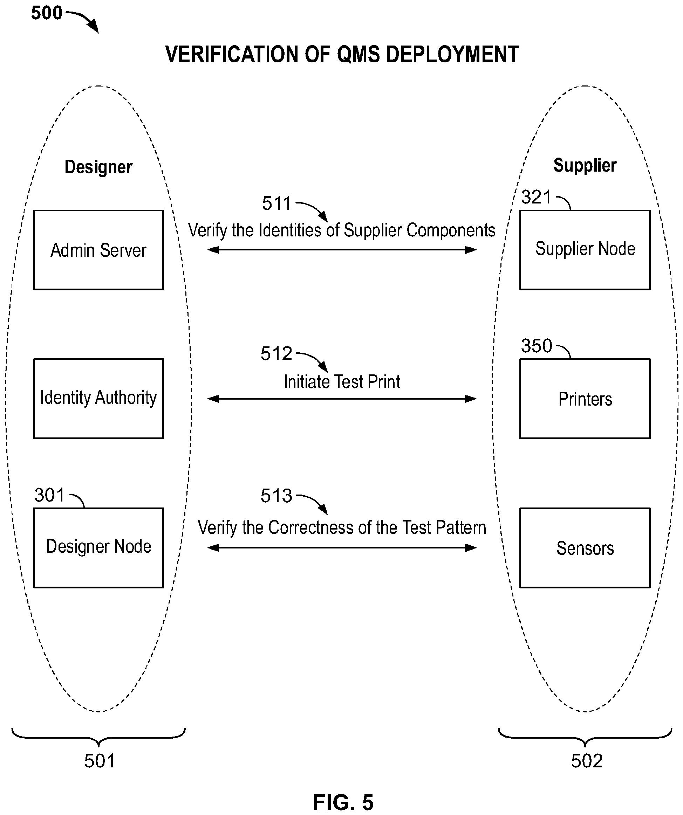

Referring to step 402 of process flow diagram 400, verification of QMS 18 deployment is performed. Post deployment, the designer QMS deployment uses a method to verify the QMS 18 deployment by running a set of transactions that may be referred to as AM vendor checkpoints, as illustrated in the process flow diagram 500 of FIG. 5. FIG. 5 is illustrated including designer actions 501 and AM vendor actions 502. First, at step 511, authorized AM vendor identities are verified by an AM vendor checkpoint. These checkpoints are programs that may compare the information received by the nodes 321 - 324 to verify and record information such as: company code, printer specification and calibrations, technician credentials, and any other information agreed in the general contracts between designer and AM vendor. Then, at step 512, a "test component" sent by the AM vendor is verified by the AM vendor checkpoint. The checkpoint verifies and records information such as: validation of printer ID's, corresponding printer type, and printer test pattern. Upon successful communication with the designer node 301, the AM vendor triggers the identity of the AM vendor and its components followed by the "test component". Then, at step 513, the designer and AM vendor nodes (301, 321 - 324) execute the checkpoint and verify the information received from the AM vendor server against the stored parameters. If there is a consensus in the results, these transactions are recorded in the blockchain ledger 100. Whenever the QMS 18 is upgraded *(e.g.,* change in the parameters) the corresponding checkpoint may be upgraded and redeployed in the nodes 321 - 324.

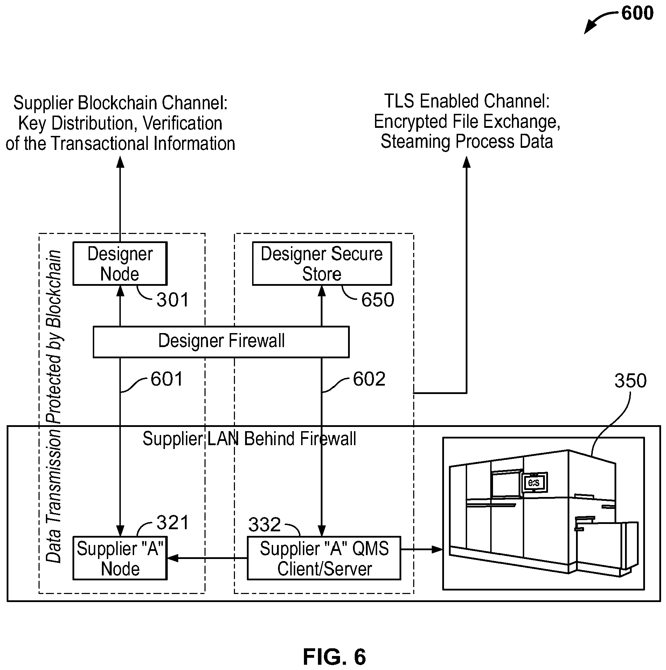

Referring to step 403 of process flow diagram 400, one or more component designs are distributed to the various AM vendors for manufacturing using AM techniques. The designs may be distributed using encrypted files that require a "key" to access. As shown in FIG. 6, which is a system representation 600 of the distribution process, the security of the file distribution is based on ensuring the keys and encrypted files are sent via two different communication networks, as follows: a first blockchain channel (601) is used to record the transactions as agreed between the designer and AM vendor nodes (301, 321 - 324). This channel is also used to distribute the keys to decrypt the encrypted files received from the designer. Using a second blockchain channel, the design files are distributed from a secure "store" at the designer to the AM vendor server 332, such distribution being transport layer security (TLS) enabled. The integrity of the files received by the AM vendor server 332 is verified by the checkpoints deployed in the AM vendor blockchain channel and those transactions are appended in the ledger of the blockchain 100.

Referring to step 404 of process flow diagram 400, a protocol for access control is established. As will be appreciated, all of the applications and users that need to query or submit information to the AM network may be authenticated and their roles authorized for performing a particular function. In this manner, requests for read and write operations by unidentified users or unauthorized roles will be invalidated by the AM network. For example: for an AM printer whose calibration has expired, any jobs performed on that printer may be failed by the checkpoint; for a technician whose accreditation or certification has expired, any operation performed by that user, will invalidated by the checkpoint; for a technician who does not have print role, any print command issued through that user login will be invalidated; for a quality inspector whose authorization stamp accreditation has expired, such inspector will not be able perform audit any functions; any request by an application/user login who does not have the role to access the secure keys to decrypt the design files will be invalidated by the checkpoint.

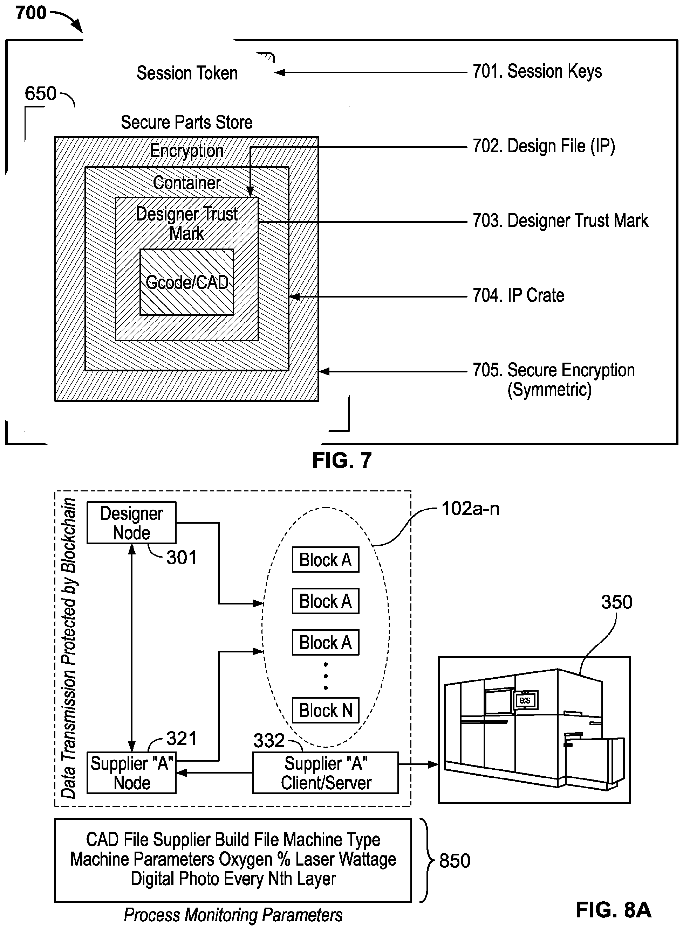

In view of the foregoing, FIG. 7 illustrates an access control concept 700 for an AM vendor-received design file that is restricted by a multi-layer method of encrypting the design file. The requested design files are kept within a software "crate" 704. Every design file instance (702) requested by an AM vendor is embedded covertly with a binary code called a designer "TrustMark" (703), along with the original file. For example, the designer TrustMark may be generated using symmetric key (705) with inputs including the component number, AM vendor code, and/or session token (701) recorded prior in the blockchain 100 ledger. The designer TrustMark enabled design file may be crated and encrypted to be saved in the secure store 650 at the designer end. The encrypted file requires the session keys 701 and the encryption keys 705 to decrypt the design file. While the design files themselves are transferred via the second channel 602 (as shown in FIG. 6), the keys are securely exchanged by the first channel 601, using blockchain 100. The keys to decrypt the design files are stored in a blockchain ledger, which is accessible only to the designer and no access to the AM vendor. When AM vendor receives the order to manufacture the component from the designer, the decryption keys are moved to a temporary block in the blockchain that is accessible to the AM vendor node. This temporary block may have expiry time after which data gets purged from the blockchain. AM vendor client performs uncrate/unpack and decryption of designer file interacting with blockchain node. Once the manufacture ready design file is retrieved, the AM vendor client 332 constantly monitors the file access events for the design file and records these events in the blockchain. The smart contract in the Blockchain will trigger any abnormal and suspicious access to the design file. Once the print session is complete, the smart contract in the blockchain triggers the AM vendor client to delete the design file from the AM vendor server. Evidence of the deleted file event is recorded in the blockchain.

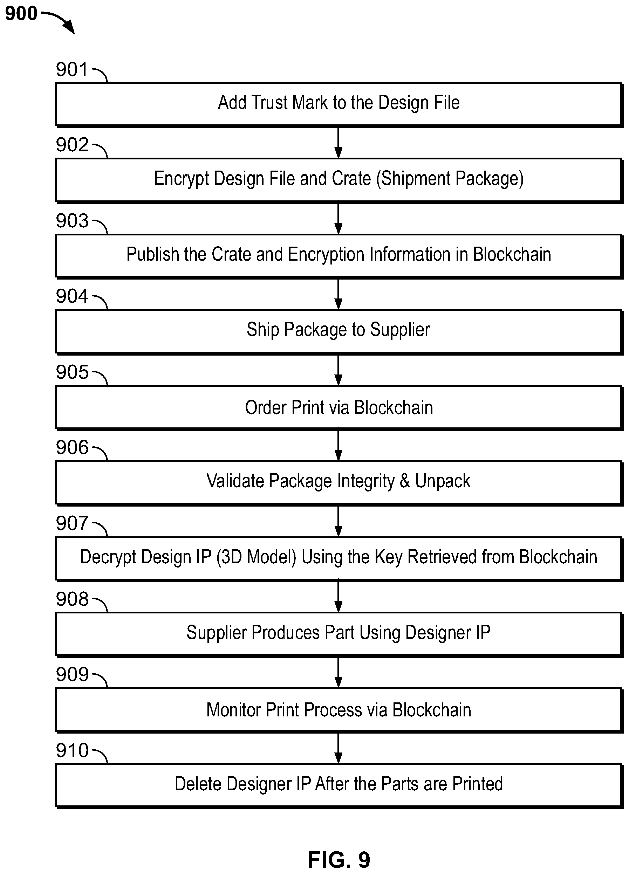

In this manner, additionally, FIG. 9 provides an outline for one embodiment of a secure workflow method 900. The method includes the following steps, performed at the designer: adding a TrustMark to the design file (901), encrypting the design file and crate to form a shipment package (902), publishing the crate and encryption information via blockchain (903), shipping the package to the AM vendor (904), and ordering the print via blockchain (905). The method includes the following steps, performed at the AM vendor: ordering the print file (model design and parameters) via blockchain (905), validating the package integrity and unpacking the package (906), decrypting the designer IP (3D model) using the key retrieved from blockchain (907), producing the component using an AM apparatus (908), and deleting the designer IP after the component is printed (910). The designer also monitors the print process via blockchain during the AM fabrication component fabrication process (909).

Referring back to step 405 of process flow diagram 400, monitoring of the component printing process is performed (*also* FIG. 9 (908)). Process monitoring is also referred to as an in-situ inspection technique. This technique functions as a method to achieve objective evidence of compliance to design intent. It is objective because the person reviewing the quality data does not have any input into the data itself. The software (and if necessary, the inspector) only evaluates and decides as to whether the component being printed meets the intent of the designer.

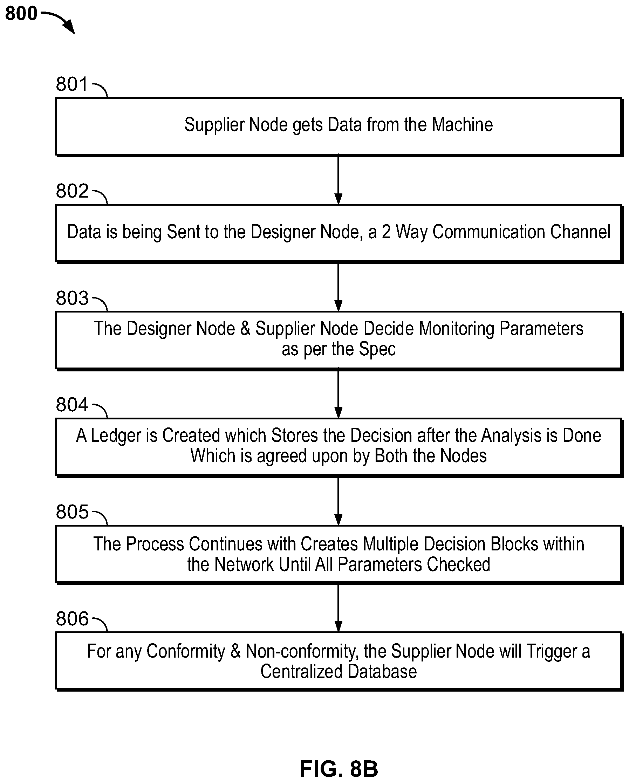

In this regard, FIG. 8A is a system diagram and FIG. 8B is a process flowchart 800 illustrating the manner in which using the blockchain 100 serves to protect IP data during transmission between the designer server and the AM vendor server, during the AM component fabrication process ("build"). During a build, the printer (350) continuously monitors and stores data from hundreds of different sources, for example those listed at block 850 of FIG. 8A, among various others. This data will also be transferred across server transmissions and is desired to be protected from hacking. Referring next to FIG. 8B, first, at step 801, the AM vendor node (321 - 324) receives any such data from printer 350. For example, data may be generated every time that a compliance "checkpoint" has been passed, as noted above. This compliance event may be tied to a particular component number or serial number of the manufactured component. Next, at step 802 the data is sent to the designer node 301 via a two-way communication channel (311 - 314). Next, at step 803, the designer node (321 - 324) and AM vendor node (301) evaluate/make a decision upon monitoring parameters as per the previously communicated specification. Then, at step 804, a blockchain 100 ledger is created that stores the decision after the analysis is done, which is agreed upon by both of the nodes (301, 321 - 324). The ledger may help retrieve the trace of the manufacturing history, and any of the process parameters, along with printer identity, manufacturer's credentials, and print time. Next, at step 805, the process is repeated such that multiple decision blocks are created within network 300 until all parameters are checked. Then, at step 806, for both the conforming and non-conforming (if any) parameters, the data is written at the AM vendor database (342).

Referring to step 406 of process flow diagram 400, control and validation of the printed component is performed. For example, the component printing lifecycle may be sub-divided into a series of logical process steps. These logical steps have an objective method of measuring the successful exit criteria of the process steps if it complies within the specification. The logical steps correspond with the previously-described printing checkpoints, which enable the objective verification of the output of the printing process generated by the printer 350. These checkpoints may have entry criteria wherein a prior checkpoint should have passed the exit criteria. Further, these checkpoints may have exit criteria wherein a certain role (such as an auditor) may provide their assessment. The checkpoints may be modeled to be easily updated and deployed in the AM vendor nodes 321 - 324.

Accordingly, the present disclosure has provided embodiments of distributed quality management and control systems and methods for decentralized manufacturing using blockchain, which exhibit numerous advantages over the prior art. For example, the embodiments protect both designer and AM vendor/vendor intellection property from hacking with the intent to steal designs through the use of blockchain technology. The embodiments introduce the concept secure file transfer where the system will crate, encrypt, and send to the files to the appropriate AM vendor. The embodiments also provide for component print verification, wherein verification is performed against the specification requirements and technical specifications. Utilizing the blockchain technology, additional (unaccounted for) components are prevented from being manufactured and subsequently sold on a "black market." Furthermore, the embodiments allow for component manufacture using the approved and verifiable process necessary to produce a quality component, utilizing various checkpoints to ensure quality and design compliance. A summary of the checkpoints may be returned from the printer and verified by the present embodiment and recorded in a blockchain ledger to ensure traceability. This tracing generates a component "birth record" event recorded in the blockchain ledger trace upon successful verification by auditors.

While at least one exemplary embodiment has been presented in the foregoing Detailed Description, it should be appreciated that a vast number of variations exist. It should also be appreciated that the exemplary embodiment or exemplary embodiments are only examples, and are not intended to limit the scope, applicability, or configuration of the invention in any way. Rather, the foregoing Detailed Description will provide those skilled in the art with a convenient road map for implementing an exemplary embodiment of the invention. Various changes may be made in the function and arrangement of elements described in an exemplary embodiment without departing from the scope of the invention as set-forth in the appended Claims.

## Claims

1. A method for secure transfer of an additive manufacturing design file and for process monitoring of additively manufactured articles that are manufactured in accordance with such design file, the method comprising the steps of:
at an article designer located at a first location, generating the additive manufacturing design file;
from the first location, sending the additive manufacturing design file to an additive manufacturing AM vendor located at a second location different from the first location, wherein the additive manufacturing design file is sent in an encrypted manner;
at the second location, using an additive manufacturing tool, manufacturing the article in accordance with the design file, wherein the additive manufacturing tool comprises a plurality of process monitoring sensors;
at the second location, and using the plurality of process monitoring sensors, generating a plurality of process parameters associated with the manufacture of the article;
at the second location, generating a cryptographic, distributed ledger comprising the plurality of process parameters, wherein the ledger is generated in the manner of a block-chain; and
from the second location, distributing the ledger to one or more recipients within a private network, the one or more recipients within the private network being defined by the article designer at the first location.

2. The method of claim 1, wherein sending the additive manufacturing design file comprises associating with the additive manufacturing design file a symmetric key-generated digital mark, the digital mark being generated with inputs comprising a component number associated with the article, a code associated with the AM vendor, and a session token, wherein the digital mark is recorded in the ledger prior to sending the additive manufacturing design file.

3. The method of claim 1, further comprising, prior to sending the additive manufacturing design file, validating the AM vendor, wherein validating the AM vendor comprises receiving, at the article designer from the AM vendor, AM vendor information selected from the group consisting of: a company code, printer specifications, printer calibrations, technician credentials, and combinations of two or more thereof.

4. The method of claim 3, wherein validating the AM vendor further comprises receiving, at the AM vendor from the AM article designer, a test article, and thereafter receiving, at the AM article designer from the AM vendor, return test article parameters based on a test printing of the test article at the AM vendor; and
verifying, at the AM article designer, the return test article parameters in comparison with the additive manufacturing design file, and recording such comparison in the ledger.

5. The method of claim 1, wherein sending the additive manufacturing design file is performed using two separate communication channels, wherein a first communication channel comprises the additive manufacturing design file in an encrypted format, and wherein a second communication channel comprises a decryption key for decrypting the encrypted format of the additive manufacturing design file.

6. The method of claim 1, wherein the private network comprises a plurality of channels, and wherein communication between the AM vendor and the article designer is performed on a first channel that is separate from additional channels that other AM vendors use for communication with the article designer.

7. The method of claim 1, wherein generating the cryptographic, distributed ledger comprising the plurality of process parameters and distributing the ledger to the one or more recipients is performed multiple times during the manufacturing the article in accordance with the design file, wherein the multiple times correspond with predetermined checkpoints of the manufacturing the article.

8. The method of claim 1, at the AM vendor, for the additive manufacturing tool, generating a baseline sensor profile for each of the plurality of plurality of process monitoring sensors, prior to manufacturing the article.

9. The method of claim 1, wherein the additive manufacturing design file is generated in the form of a computer aided design (CAD) file.

10. The method of claim 1, wherein the plurality of process parameters associated with the manufacture of the article are selected from the group consisting of: temperature sensors, image sensors, humidity level sensors, air pressure sensors, gas level sensors, chiller state sensors, collector position sensors, filter pressure sensors, re-coater position and/or speed sensors, dispenser position sensors, and combinations of two or more thereof.

11. The method of claim 1, further comprising, after distributing the ledger to the one or more recipients within a private network, at the article designer, comparing the plurality of process parameters associated with the manufacture of the article with the additive manufacturing design file for conformity, and recording such comparison in the ledger.

12. The method of claim 1, further comprising, at the article designer, notifying the AM vendor of any non-conformities with the additive manufacturing design file, and at the AM vendor, in response to the notification, preforming a remedial action with respect to manufacturing the article.

13. The method of claim 1, further comprising, after distributing the ledger to the one or more recipients within a private network and at the AM vendor, deleting the additive manufacturing design file.

14. The method of claim 1, wherein, prior to distributing the ledger to the one or more recipients within the private network, access control information is established for the AM vendor, wherein establishing access control information is selected from the group consisting of: verifying AM printer calibration expiration information, verifying technician accreditation or certification expired information, verifying technician print role information, verifying quality inspector authorization or accreditation expiration information, verifying application/user login secure key access information, and combinations of two or more thereof.

15. The method of claim 1, wherein manufacturing the article comprises manufacturing a gas turbine engine (GTE) component.
